# EUROPEAN PATENT SPECIFICATION

(11) **EP 1 924 122 B1**
(45) Date of publication and mention of the grant of the patent: **24.09.2014**
(21) Application number: 06796915.4
(22) Date of filing: 29.08.2006
(51) Int. Cl.: H04R 17/00

(54) **ULTRASONIC SENSOR**
ULTRASCHALLSENSOR
CAPTEUR ULTRASONIQUE

(30) Priority: 09.09.2005 JP 2005262742
(43) Date of publication of application: 21.05.2008
(73) Proprietor: MURATA MANUFACTURING CO., LTD., Nagaokakyo-shi, Kyoto 617-8555 (JP)
(72) Inventor: OTA, Junshi, Nagaokakyo-shi, Kyoto 617-8555 (JP)
(74) Representative: Reeve, Nicholas Edward
(86) International application number: PCT/JP2006/316935
(87) International publication number: WO 2007/029559

(56) References cited:
- EP-A1- 1 962 552
- DE-A1- 10 123 612
- JP-A- 2000 032 594
- JP-A- 2000 032 594
- JP-A- 2001 078 296
- US-A1- 2003 121 331

## Description

### Technical Field

The present invention relates to ultrasonic sensors, and more specifically to an ultrasonic sensor used for, for example, back sonar or the like of an automobile.

### Background to the Invention

An ultrasonic sensor of the related art used for back sonar or the like of automobiles is attached to a bumper or the like of the automobiles, and is used as an obstacle detection sensor such as a back sonar or corner sensor. The ultrasonic sensor is attached to the bumper or the like in a manner that a bottom portion of a case member having a piezoelectric element fixed thereto becomes substantially perpendicular to a road surface and that the ultrasonic sensor is positioned and adjusted in a direction in which ultrasonic waves are emitted. In an ultrasonic sensor used for such an application, if the range of ultrasonic wave transmission and reception in a horizontal installation direction is too narrow, a dead angle occurs in the detection range. If the range of ultrasonic wave transmission and reception in a vertical direction is too broad, reflection of waves from the ground surface causes noise. Therefore, anisotropy in directional properties in the horizontal and vertical installation directions is demanded.

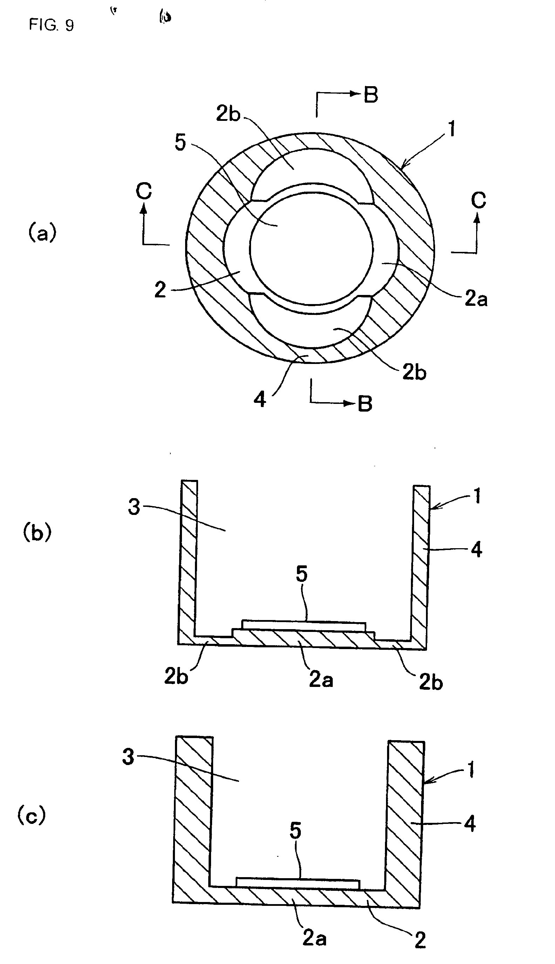

Fig. 9 includes schematic diagrams showing an example structure of a case member 1 used for an ultrasonic sensor as described above. Fig. 9(a) is a cross-sectional plan view of the case member 1, Fig. 9(b) is a cross-sectional view taken along a line B-B (in a vertical installation direction) shown in Fig. 9(a), and Fig. 9(c) is a cross-sectional view taken along a line C-C (in a horizontal installation direction) shown in Fig. 9(a). The case member 1 is entirely composed of a metal material such as aluminum, and is provided with a hollow portion 3 which is open toward the rear. A bottom portion 2 of the case member 1 has a thick portion 2a at the center thereof in the vertical installation direction, and substantially crescent-shaped thin portions 2b at both sides thereof. One electrode surface of a piezoelectric element 5 is bonded to an inner surface of the thick portion 2a at the center of the bottom portion 2 by an electrically conductive adhesive or the like. In the cross section in the vertical installation direction, therefore, as shown in Fig. 9(b), the thin portions 2b are located at either side of the thick portion 2a having the piezoelectric element 5 mounted thereon. In the cross section in the horizontal installation direction passing through the center of the case member 1, as shown in Fig. 9(c), the bottom portion 2 entirely serves as the thick portion 2a. The thick portion 2a has a greater thickness than a minimum thickness of an outer peripheral sidewall portion 4 of the case member 1, and the thin portions 2b have a smaller thickness than the minimum thickness of the outer peripheral sidewall portion 4 of the case member 1.

The ultrasonic sensor having the structure described above can narrow the transmission and reception range in the vertical installation direction (the direction in which the width of the hollow portion 3 is long). Since there is a difference between the transmission and reception range in the horizontal installation direction and the transmission and reception range in the vertical installation direction, an ultrasonic sensor having anisotropy in directional properties can be obtained (see, for example, Japanese Unexamined Patent Application Publication No. 2000-32594 (Patent Document 1))

However, the sidewall of the case member 1 in the ultrasonic sensor described in Patent Document 1 is provided with a thick portion and thin portions to achieve desired directional properties, and the case member 1 with such a complex structure is manufactured aluminum by processing such as forging, cutting, and die casting (high-pressure casting). Due to the complexity of the structure, manufacturing cost is high.

Another problem is as follows. It is preferable that the surface of the case member 1 to which the piezoelectric element is adhered has a structure that ensures some degree of vibration. In particular, it is preferable that a portion (corner/edge) defined between the bottom surface and sidewall of the case member 1 vibrates to some extent. In the ultrasonic sensor of the related art, however, the case member 1 is provided with a thick portion and thin portions, and the vibration particularly in the vicinity of the thick portion is suppressed. It is therefore difficult to achieve noticeable anisotropy.

Still another problem is as follows. The case member 1 in the ultrasonic sensor of the related art is designed such that the hollow portion of the case member 1 is formed to have an elliptical cross section in order to ensure anisotropy in directional properties. The case member 1 formed into an elliptical shape has a thin sidewall portion, and the amplitude of side vibration is large at that portion. As a result, for example, if the ultrasonic sensor is mounted in an automobile or the like, characteristics of the ultrasonic sensor are liable to change in a state where a rubber cushion and a housing are held, and it is therefore difficult to ensure desired characteristics.

US 2003/0121331 discloses another example of an ultrasonic transceiver known in the art.

Accordingly, the present invention aims to provide an ultrasonic sensor having stable anisotropy in directional properties.

### Summary of the Invention

The present invention provides an ultrasonic sensor comprising: an outer case member having a cylindrical shape with a bottom wall; and a piezoelectric element provided on an inner surface side of the bottom wall of the outer case member; and an inner case member having a cylindrical shape; characterised in that a portion of said inner case member which is in contact with said bottom wall, is provided with cutouts so as to reduce the contact surface between said bottom wall and said inner case member.

In this manner, the case members used for the ultrasonic sensor are separately formed with a simple structure and are combined. Thus, an ultrasonic sensor having noticeable anisotropy in directional properties can be achieved. Further, each of the parts can be formed by simple structural parts, and can therefore be manufactured and processed at low cost.

Preferably in the ultrasonic sensor, the cutouts are provided so as to face each other in the portion of said inner case member contacting the bottom wall of the outer case member.

In this manner, the cutouts are formed so as to face each other in the portion contacting the bottom portion on the inner surface side of the sidewall of the case member, and thus an elliptical vibrating surface on can be obtained, and the amplitude in the vibrating surface can be increased.

Furthermore, in the ultrasonic sensor, according to the present invention, preferably, the inner case member is formed of a metal material having a higher density than that of the outer case member.

Since the inner case member uses a metal material having a higher density than that of the outer case member, an ultrasonic sensor with small changes in side vibration of the case members can be provided.

Thus, preferred embodiments of the invention have the following advantages.

In the preferred embodiments of the invention where a case member of an ultrasonic sensor in which cutouts are formed so as to face each other in a portion contacting a bottom on an inner surface side of a sidewall of the case member is used, a vibrating surface of the ultrasonic sensor in which an elliptical vibrating-surface amplitude profile is formed can be achieved. This has the advantage that an ultrasonic sensor having noticeable anisotropic of directional properties in horizontal and vertical installation directions can be achieved.

Further, in preferred embodiments of the invention where the inner case member of the ultrasonic sensor is formed of a metal material with a higher density than that of the outer case member, side vibration in the ultrasonic sensor can be reduced. This has the advantage that an ultrasonic sensor with small changes in characteristics of the ultrasonic sensor when the ultrasonic sensor is installed can be achieved.

Further, since in embodiments of the invention the case member of the ultrasonic sensor is formed with a simple structure, a case member which is easy to manufacture and process can be achieved.

The above aim, and other aims, features and advantages of the present invention will become more apparent from the following description of an embodiment of the invention.

### Brief Description of the Drawings

The embodiment of the invention will now be described, by way of example only, and with reference to the accompanying drawings in which:
Fig. 1(a) shows a plan view of an outer case member of an ultrasonic sensor according to an embodiment of the present invention, and Fig. 1 (b) is a cross-sectional view thereof;
Fig. 2(a) shows a top plan view of an inner case member of the ultrasonic sensor according to an embodiment of the present invention, Fig. 2 (b) shows a cross-sectional view thereof, and Fig. 2 (c) shows a bottom plan view thereof;
Fig. 3(a) shows a perspective view of the outer case member according to an embodiment of the present invention, and Fig. 3(b) shows a perspective view of the inner case member according to an embodiment of the present invention;
Fig. 4(a) shows a cross-sectional view in a vertical installation direction of the ultrasonic sensor according to an embodiment of the present invention, and Fig. 4(b) shows a cross-sectional view in a horizontal installation direction thereof;
Fig. 5 includes diagrams showing the magnitude of displacement of side vibration of an X side surface and Y side surface of the ultrasonic sensor according to an embodiment of the present invention;
Fig. 6 is a diagram showing positions of the X side surface and Y side surface of the ultrasonic sensor according to an embodiment of the present invention;
Fig. 7 is a perspective view showing an existing case member of an ultrasonic sensor;
Fig. 8 is a perspective view showing another embodiment of the inner case member of the ultrasonic sensor according to the present invention; and
Fig. 9(a) is a cross-sectional plan view showing a case member according to an example of an ultrasonic sensor of the related art, Fig. 9 (b) shows a cross-sectional view taken along a line B-B shown in Fig. 9(a), and Fig. 9(c) shows a cross-sectional view taken along a line C-C shown in Fig. 9(a).

The following reference numerals are used:
- 10: outer case member
- 12: opening portion
- 14: hollow portion
- 16: bottom surface portion
- 18: sidewall
- 20: vibrating surface
- 22: range of vibration
- 30: inner case member
- 32: sidewall
- 34: hollow portion
- 36: cutout portion
- 40: ultrasonic sensor
- 42: piezoelectric element
- 44: sound-absorbing member
- 46: substrate
- 48: cable

### Description of a Preferred Embodiment of the Invention

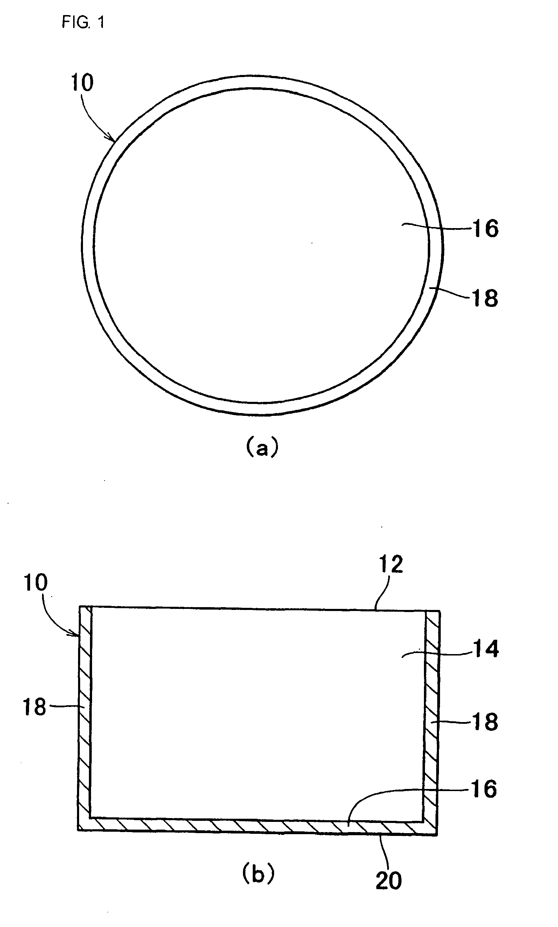

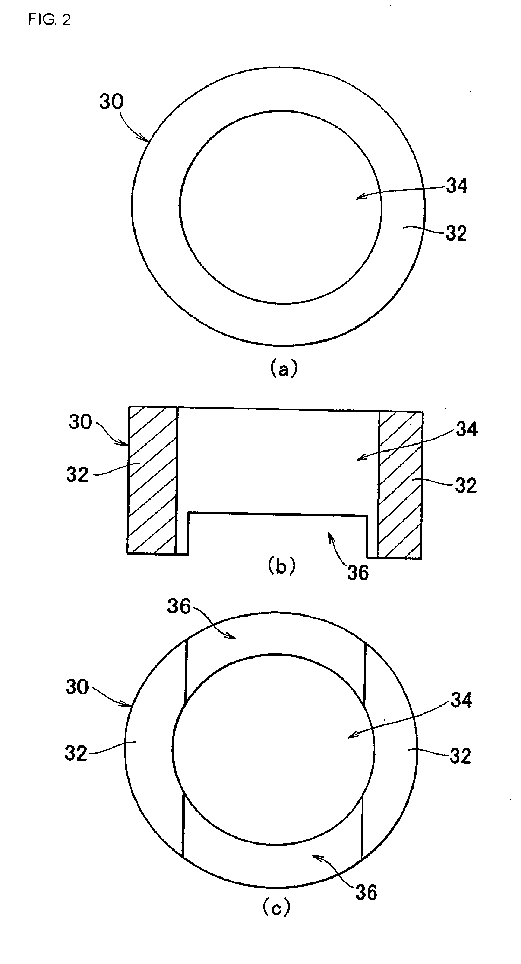

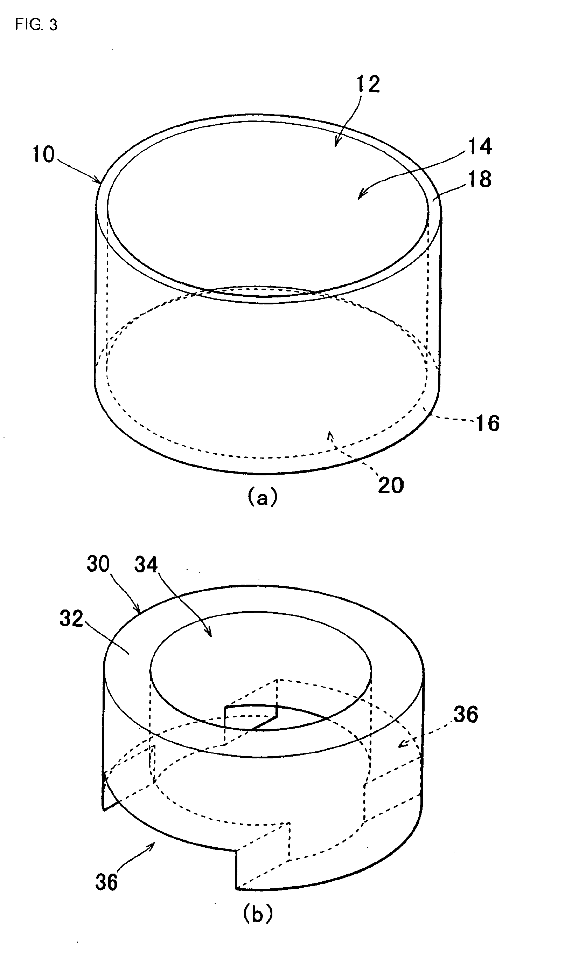

Figs. 1, 2, and 3 show an ultrasonic sensor according to an embodiment of the present invention. Figs. 1 and 2 show an outer case member 10 and an inner case member 30 used in the ultrasonic sensor of the present embodiment. Fig. 1(a) is a plan view of the outer case member 10, and Fig. 1(b) is a cross-sectional view thereof. Fig. 2(a) is a top plan view of the inner case member 30, Fig. 2(b) is a cross-sectional view thereof, and Fig. 2(c) is a bottom plan view thereof. Figs. 3(a) and 3(b) are perspective views of the outer case member 10 and inner case member 30 of the ultrasonic sensor according to the present invention. The ultrasonic sensor includes the outer case member 10 having, for example, a cylindrical shape with a bottom and the inner case member 30 having a cylindrical shape.

The outer case member 10 is provided with an opening portion 12 and a hollow portion 14, and further includes a bottom surface portion 16 and a sidewall 18. A vibrating surface 20 is located in an outer surface of the bottom surface portion 16. A piezoelectric element is mounted on an inner surface of the bottom surface portion 16 of the outer case member 10.

The outer case member 10 is formed of a metal material such as aluminum.

The outer case member 10 is formed with, for example, an overall height of 9 mm, an outer diameter of 14 mm, and an inner diameter of 13 mm. The bottom surface portion 16 of the outer case member 10 is formed with a uniform thickness of 0.5 mm, and the sidewall 18 of the outer case member 10 is formed with a uniform thickness of 0.5 mm.

The outer case member 10 is manufactured by, for example, pressing a plate subjected to surface treatment and painting.

The inner case member 30 has a function for providing anisotropy in directional properties of the ultrasonic sensor. The inner case member 30 is located in the hollow portion 14 of the outer case member 10. The inner case member 30 is formed into a tubular shape having a hollow portion 34. Two cutout portions 36 are provided so as to face each other in a lower portion of the sidewall 32 of the inner case member 30.

The inner case member 30 is formed of a metal material such as zinc. Preferably, the metal material used for the inner case member 30 has a greater density than that used for the outer case member 10.

The inner case member 30 is formed with, for example, an overall height of 7 mm, an outer diameter of 13 mm, and an inner diameter of 9 mm. The sidewall 32 of the inner case member 30 has a thickness of 2 mm. The cutout portions 36 are formed with, for example, a cutout width of 8 mm and a cutout depth of 2 mm.

The inner case member 30 located in the hollow portion 14 of the outer case member 10 produces a portion where the inner case member 30 is not brought into contact with the vibrating surface 20. Thus, a vibration with an elliptical amplitude profile occurs in the vibrating surface 20. Consequently, anisotropy in directional properties of the ultrasonic sensor is obtained.

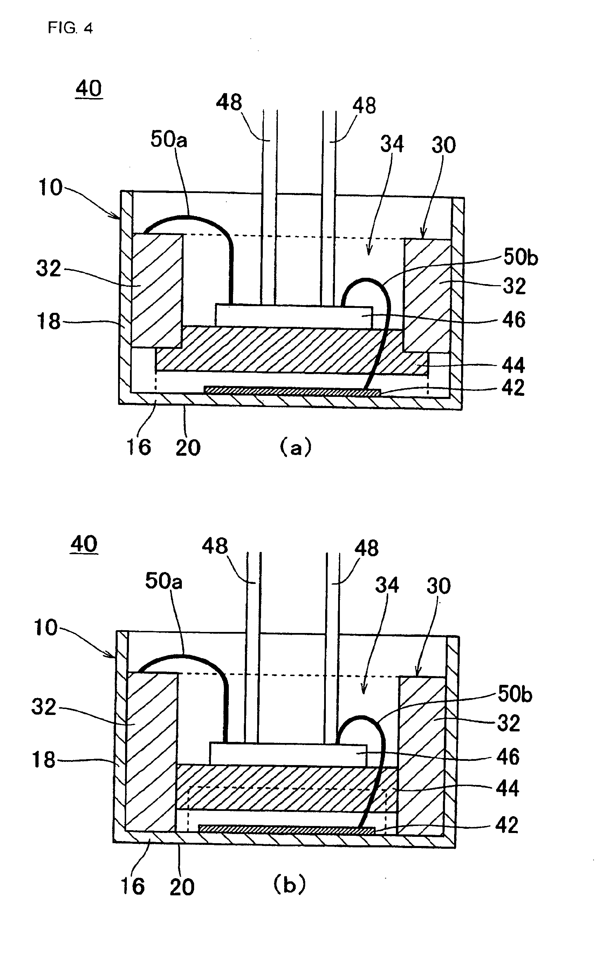

Fig. 4 includes cross-sectional views of an ultrasonic sensor 40 including the outer case member 10 and the inner case member 30 according to the present invention. Fig. 4(a) is a cross-sectional view in the vertical installation direction, and Fig. 4(b) is a cross-sectional view in the horizontal installation direction.

A piezoelectric element 42 is mounted on an inner surface of the bottom surface portion 16 of the outer case member 10. A sound-absorbing member 44 is located in the hollow portion 34 of the inner case member 30, and a substrate 46 is provided on a top surface of the sound-absorbing member 44. The substrate 46 is connected to cables 48.

The substrate 46 is connected to the inner case member 30 through a wire 50a, and is electrically connected to an electrode on one surface of the piezoelectric element 42 through the inner case member 30 and the outer case member 10. The substrate 46 and an electrode on an opposite surface of the piezoelectric element 42 are electrically connected though a wire 50b.

A driving voltage having a frequency equal to a natural frequency of an ultrasonic sensor formed of the outer case member 10 and the inner case member 30 is applied to the piezoelectric element 42 to excite the piezoelectric element 42 to cause vibration of the vibrating surface 20. Thus, an ultrasonic wave is transmitted. Receipt of an acoustic wave at the vibrating surface 20 causes natural vibration of the vibrating surface 20, and an electrical signal is obtained.

In the ultrasonic sensor, since the cutout portions 36 is provided so as to face each other in the sidewall 32 of the inner case member 30, an elliptical vibration profile can be formed in the vibrating surface 20 of the outer case member 10. Thus, noticeable anisotropy in directional properties in the horizontal and vertical installation directions can be achieved.

Further, the inner case member 30 uses a metal material having a higher density than that of the outer case member 10, whereby the amount of displacement of side vibration of the sidewall 18 of the outer case member 10 can be reduced. Therefore, small changes in characteristics of the ultrasonic sensor can be obtained in a case where the ultrasonic sensor is mounted in an automobile or the like.

Furthermore, each of the case members of the ultrasonic sensor can be manufactured with a simple structure instead of a complex structure like an ultrasonic sensor of the related art, and can therefore be easily manufactured and processed.

### (Experimental Example 1)

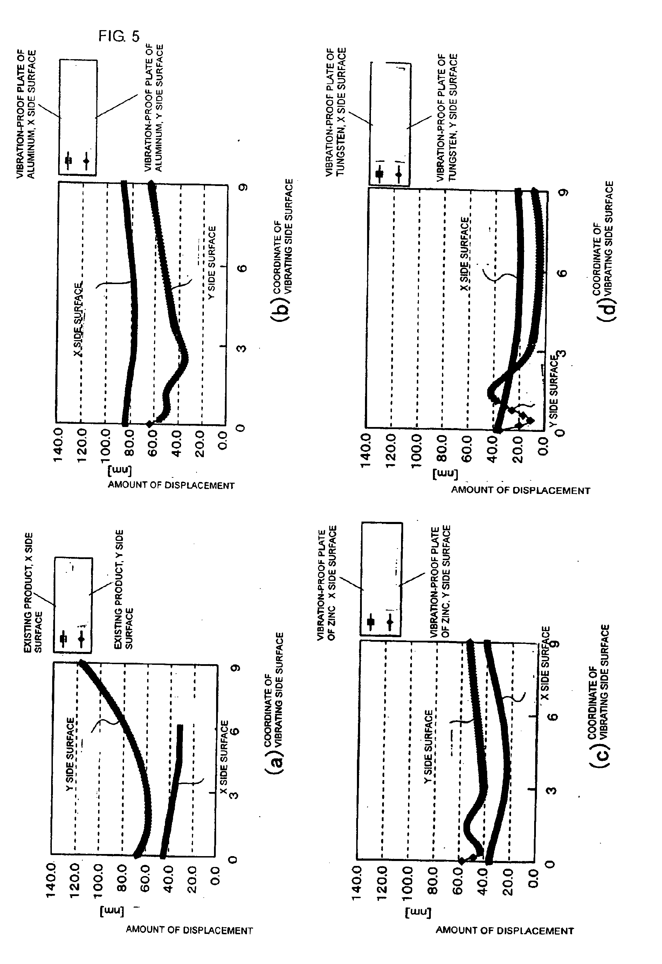

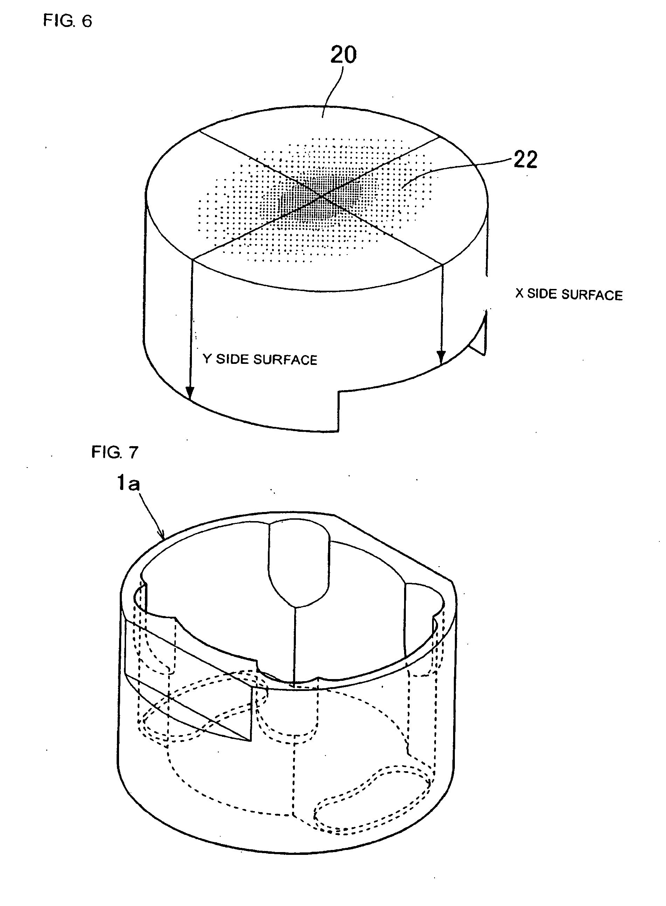

Fig. 5 shows results of numerical calculation of the magnitude of displacement of side vibration of an X side surface and Y side surface of each inner case member of products produced by changing the material of the inner case member 30 in a case where the outer case member 10 shown in Fig. 1 and the inner case member 30 shown in Fig. 2 were used as case members. The abscissa represents the coordinate of a vibrating side surface, and the ordinate represents the amount of displacement of side vibration. The numerical calculation was carried out using a finite element method. The finite element method is advantageous for performing numerical calculation even on complex shaped objects, irrespective of the shape of the objects. The X side surface refers to, as shown in Fig. 6, a side surface located as an extension in a minor-axis direction of an elliptical range of vibration 22 formed on the vibrating surface 20, and the Y side surface refers to a side surface located as an extension in a major-axis direction of the elliptical range of vibration 22 formed on the vibrating surface 20. In the range of vibration 22, the deeper the color is , the larger the amplitude is.

For the purpose of comparison, a result of numerical calculation of the magnitude of displacement of side vibration in a case member 1a of an existing ultrasonic sensor is also shown. The case member 1a of the existing ultrasonic sensor was manufactured to have the shape shown in Fig. 7.

The current numerical calculation was carried out using aluminum as a metal martial of the existing product shown in Fig. 7 and using aluminum, zinc and tungsten as metal materials of the inner case member 30 according to the present invention. Aluminum was used as a metal material of the outer case member 10.

Fig. 5(a) shows a result obtained by the existing product, Fig. 5(b) shows a result obtained using aluminum as the metal material of the inner case member 30, Fig. 5(c) shows a result obtained using zinc as the metal material of the inner case member 30, and Fig. 5(d) shows a result obtained using tungsten as the metal material of the inner case member 30.

The magnitude of displacement of side vibration of the existing product was about 40.0 nm on the X side surface and was 60.0 nm or more on the Y side surface.

The magnitude of displacement of side vibration obtained using aluminum as the material of the inner case member 30, which is the same as the material of the outer case member 10, was about 80.0 nm on the X side surface and was 40.0 nm to 60.0 nm on the Y side surface.

On the other hand, the magnitude of displacement of side vibration obtained using zinc as the material of the inner case member 30, which had a higher density than that of the outer case member 10, was 20.0 nm to 40.0 nm on the X side surface and was 40.0 nm to 60.0 nm on the Y side surface.

The magnitude of displacement of side vibration obtained using tungsten as the material of the inner case member 30, which had a higher density than that of the outer case member 10, was 20.0 nm to 40.0 nm on the X side surface and was 10.0 nm to 40.0 nm on the Y side surface.

As can be seen from the above results, when the existing product and the product in which aluminum is used as the material of the inner case member 30 are compared with the products in which zinc and tungsten are used as the materials of the inner case member 30, the amount of displacement of side vibration of the X side surface and Y side surface of each case member was more suppressed when the products in which zinc and tungsten were used. That is, it was confirmed that the magnitude of displacement of side vibration was suppressed by using, as the metal material of the inner case member 30, a metal material having a higher density than that of the metal material used for the outer case member 10.

It was also confirmed that the larger the difference between the density of the outer case member 10 and the density of the inner case member 30, the more the magnitude of displacement of side vibration was suppressed.

### (Experimental Example 2)

Results of numerical calculation were obtained when the inner diameter of the inner case member 30 and the cutout width and cutout depth of the cutout portions 36 were changed. The numerical calculation was also carried out using a finite element method (FEM), as in Experimental Example 1. The results obtained under conditions of the cutout width and cutout depth and other conditions are shown in Table 1.

**[Table 1]**

| | Outer Diameter [mm] | Inner Diameter [mm] | Cutout Width [mm] | Cutout Depth [mm] | Resonant Frequency [kHz] |
|---|---|---|---|---|---|
| Model 1 | 13 | 10 | 7 | 2 | 37.8 |
| Model 2 | 13 | 9 | 7 | 2 | 44.7 |
| Model 3 | 13 | 9 | 8 | 2 | 40.7 |
| Model 4 | 13 | 9 | 6 | 2 | 46.3 |
| Model 5 | 13 | 9 | 8 | 1 | 40.8 |

Currently mass-produced ultrasonic sensors are ultrasonic sensors having a resonant frequency of about 40 kHz. That is, there have been widely used ultrasonic sensors which are designed so that a vibrating surface thereof has a natural vibration at about 40 kHz, and a signal that is electrically close thereto in terms of frequency is applied to excite natural vibration. It is important that a case member used for the ultrasonic sensors has a natural vibration at 40 kHz. As shown in Table 1, models 3 and 5 have a resonant frequency of around 40 kHz, and it can therefore be confirmed that they can be suitably used.

It was further confirmed that models 3 and 5 had an ellipse-like-shaped vibrating surface (not shown) and that the other models have a rhomboid-like-shaped vibrating surface (not shown). The rhombic shape could not provide stable vibration of the vibrating surface and could not provide noticeable anisotropy in directional properties. Models 3 and 5, on the other hand, which provide stable vibration in an elliptical manner by normal excitation, could achieve noticeable anisotropy in directional properties as ultrasonic sensors.

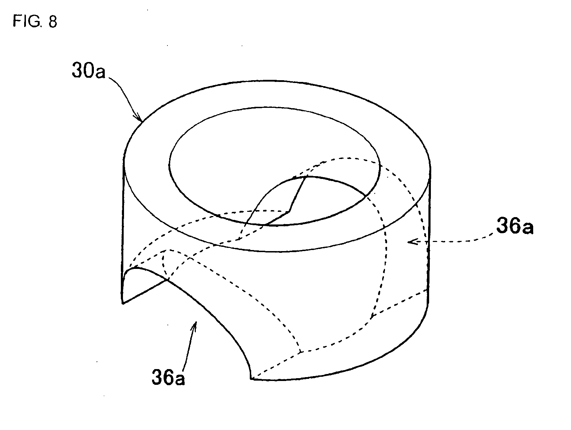

In the foregoing embodiment, the cutout portions 36 of the inner case member 30 are formed into a rectangular shape. However, the present invention is not limited thereto, and convex semicircular profiles such as cutout portions 36a in an inner case member 30a shown in Fig. 8 may be used.

## Claims

1. An ultrasonic sensor (40) comprising:
an outer case member (10) having a cylindrical shape with a bottom wall (16); and
a piezoelectric element (42) provided on an inner surface side of the bottom wall (16) of the outer case member (10); and
an inner case member (30) having a cylindrical shape;
**characterised in that**
a portion of said inner case member (30) which is in contact with said bottom wall, is provided with cutouts (36) so as to reduce the contact surface between said bottom wall (16) and said inner case member (30).

2. The ultrasonic sensor (40) according to claim 1, wherein the cutouts (36) are provided so as to face each other in the portion of said inner case member (30) contacting the bottom wall (16) of the outer case member (10).

3. The ultrasonic sensor (40) according to claim 2, wherein the inner case member (30) is formed of a metal material having a higher density than that of the outer case member (10).

## Patentansprüche

1. Ultraschallsensor (40), der Folgendes umfasst:
ein Außengehäuseelement (10) mit einer zylindrischen Form und einer Bodenwand (16); und
ein piezoelektrisches Element (42), das auf einer Innenfläche der Bodenwand (16) des Außengehäuseelements (10) vorgesehen ist; und
ein Innengehäuseelement (30) mit einer zylindrischen Form;
**dadurch gekennzeichnet, dass**
ein Teil des genannten Innengehäuseelements (30), das mit der genannten Bodenwand in Kontakt ist, mit Ausschnitten (36) versehen ist, um die Kontaktfläche zwischen der genannten Bodenwand (16) und dem genannten Innengehäuselement (30) zu reduzieren.

2. Ultraschallsensor (40) nach Anspruch 1, wobei die Ausschnitte (36) so vorgesehen sind, dass sie einander in dem Abschnitt des genannten Innengehäuseelements (30) zugewandt sind, der die Bodenwand (16) des Außengehäuseelements (10) kontaktiert.

3. Ultraschallsensor (40) nach Anspruch 2, wobei das Innengehäuseelement (30) aus einem Metallmaterial mit einer höheren Dichte als der des Außengehäuseelements (10) gebildet ist.

## Revendications

1. Capteur ultrasonique (40) comprenant :
un membre de boîtier extérieur (10) ayant une forme cylindrique avec un paroi inférieure (16); et
un élément piézoélectrique (42) fourni sur un côté de surface intérieure de la paroi inférieure (16) du membre de boîtier extérieur (10); et
un membre de boîtier intérieur (30) ayant une forme cylindrique;
**caractérisé en ce que** :
une partie dudit membre de boîtier intérieur (30) qui est en contact avec ladite paroi inférieure, est pourvue de découpures (36) de manière à réduire la surface de contact entre ladite paroi inférieure (16) et ledit membre de boîtier intérieur (30).

2. Capteur ultrasonique (40) selon la revendication 1, dans lequel les découpures (36) sont fournies de manière à être en face l'une de l'autre dans la partie dudit membre de boîtier intérieur (30) en contact avec la paroi inférieure (16) du membre de boîtier extérieur (10).

3. Capteur ultrasonique (40) selon la revendication 2, dans lequel le membre de boîtier intérieur (30) est formé d'un matériau étallique ayant une plus haute densité que celle du membre de boîtier extérieur (10).
